(19) Europäisches Patentamt / European Patent Office / Office européen des brevets

(11) **EP 3 065 012 B1**

(12) **EUROPEAN PATENT SPECIFICATION**

(45) Date of publication and mention of the grant of the patent:
**25.12.2019 Bulletin 2019/52**

(51) Int Cl.:
***G05B 19/404*** *(2006.01)*   ***G05B 19/414*** *(2006.01)*

(21) Application number: **16158543.5**

(22) Date of filing: **03.03.2016**

(54) **CONTROL DEVICE AND METHOD OF SYNCHRONIZING CONTROL**

STEUERUNGSVORRICHTUNG UND VERFAHREN ZUR SYNCHRONISIERUNG DER STEUERUNG

DISPOSITIF DE COMMANDE ET PROCÉDÉ DE COMMANDE DE SYNCHRONISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2015 JP 2015043011**

(43) Date of publication of application:
**07.09.2016 Bulletin 2016/36**

(73) Proprietor: **OMRON CORPORATION**
**Kyoto-shi, Kyoto 600-8530 (JP)**

(72) Inventors:
• **SHIMAMURA, Junji**
  **Kyoto 600-8530 (JP)**
• **KATO, Toshiaki**
  **Kyoto 600-8530 (JP)**
• **IWAI, Yosuke**
  **Kyoto 600-8530 (JP)**
• **SHIMAMURA, Tomonori**
  **Kyoto 600-8530 (JP)**
• **YAMAMOTO, Eiji**
  **Kyoto 600-8530 (JP)**

(74) Representative: **Horn Kleimann Waitzhofer**
**Patentanwälte PartG mbB**
**Ganghoferstrasse 29a**
**80339 München (DE)**

(56) References cited:
**EP-A- 0 943 973      EP-A1- 1 052 560**
**EP-A2- 1 729 192     WO-A1-2013/102338**
**US-A- 5 463 296      US-A1- 2007 013 334**

**Description**

FIELD

The present invention relates to a synchronizing control device.

BACKGROUND

When motion control synchronizes a first axis and a second axis, the information measured on the first axis is processed and transmitted to the second axis, and the delay between the measurement, processing, and transmission of the information from the first axis may create a synchronization lag between the first axis and the second axis. Patent Document 1, Japanese Unexamined Patent Application Publication No. 2014-119904 (published 30 June 2014) discloses a method of using a filter to shift the first axis position measured to compensate for the synchronization lag. Patent Document 2, EP 1 052 560 A1, discloses a numerical control system for multiple axis synchronization.

References

Patent Documents

[Patent Document 1] Japanese Unexamined Patent Application Publication No. 2014-119904 (published 30 June 2014)
[Patent Document 2] European Patent Application EP 1 052 560 A1

SUMMARY

Technical Problem

Merely taking into account the delay due to information transmission, like in the above-described method, is inadequate for implementing highly precise motion control. Solution to Problem
A control device according to embodiments of the invention has the features recited in claim 1.
Note that the first axis is not necessarily a real object, and may be a virtual axis realized through processing carried out by the processor.

Effects

The aforementioned configuration is capable of suppressing the synchronization lag due to a delay caused by the aforementioned transmission of the position command, and a delay on the second axis in a motion control system that synchronizes a first axis and a second axis.

BRIEF DESCRIPTION OF THE DRAWINGS

FIG. 1(a) is a block diagram illustrating an overall configuration of a motion control system according to a first embodiment; FIG. 1(b) is a timing chart for explaining the cause for a synchronization lag;
FIG. 2 is a block diagram illustrating a configuration of the motion control system according to the first embodiment;
FIG. 3(a) is a block diagram illustrating a configuration of a first axis system and a second axis system; FIG. 3(b) is a schematic diagram of a gantry mechanism related to the block diagram in FIG. 3(a);
FIG. 4 is a flowchart illustrating the processing steps executed in the processor in Figures 3(a) and 3(b);
FIG. 5(a) is a block diagram illustrating a configuration of a first axis system and a second axis system in the first embodiment; FIG. 5(b) is a schematic diagram of a gantry mechanism related to the block diagram in FIG. 5(a);
FIG. 6 is a block diagram illustrating a yet another configuration of the first axis system and the second axis system in the first embodiment;
FIG. 7 is a block diagram illustrating a configuration of the motion control system according to a second embodiment;
FIG. 8 is a flowchart illustrating the processing steps executed in the processor in FIG. 7;
Figures 9(a) and 9(b) are schematic diagrams illustrating a motion control system according to a third embodiment;

FIG. 10 is a diagram for explaining the processing procedures executed by the processor; and
FIG. 11 is an example of a program used in the embodiment.

DETAILED DESCRIPTION

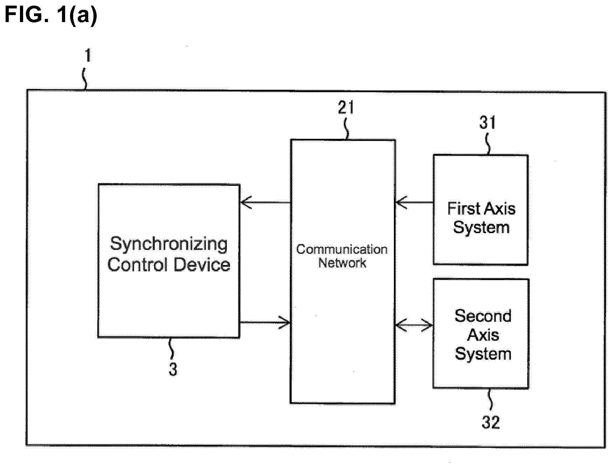

The motion control system 1 illustrated in FIG. 1(a) is provided with a synchronizing control device 3, a communication network 21, a first axis system 31, and a second axis system 32. The synchronizing control device 3 may be a programmable logic controller (PLC).

The synchronizing control device 3 is provided with a processor that periodically computes a position command for the second axis system 32 using position information for the first axis system 31, and provides an output corresponding to the second axis system 32 position command (e.g., by transmitting a second-axis position signal) to thereby synchronize the second axis system 32 with the first axis system 31.

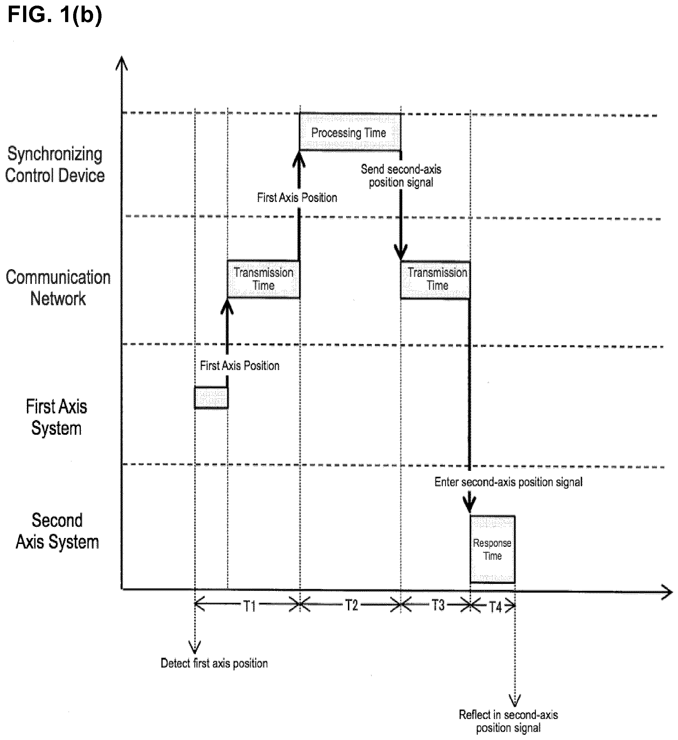

As illustrated in FIG. 1(b), the time T1 needed from detecting the first axis position to entering the first axis position in the synchronizing control device 3 via the communication network 21, the time T2 needed from the processor in the synchronizing control device 3 receiving the first axis position until the processor outputs a position command corresponding thereto (for instance, transmitting a second-axis position signal), the time T3 needed to enter the output into the second axis system 32 via the communication network 21, and the time T4 indicating the delay on the second axis system 32 each generate a synchronization lag in the motion control system 1.

The delay time T4 on the second axis is generated from a response delay due to, for example, the processing time of a servo driver, and friction and the like acting on the servo motor and the second axis system; for instance, the time T4 can indicate the time taken from the second axis system 32 receives the second-axis position signal via the communication network 21 until this signal is converted to an electrical signal and the value changes in the encoder installed in a servo motor (later described) in the second axis system.

The synchronization lag created due to the time T1 through time T4 in the synchronizing control device 3 may be compensated for as follows. Note that time T1 + time T2 is the delay on the first axis, while time T3+ time T4 is the delay on the second axis.

First Embodiment

The first embodiment compensates for the synchronization lag due to the delay on the first axis (T1 + T2), and the synchronization lag due to the delay on the second axis (T3 + T4) separately. Throughout this specification, "axis" may refer to a shaft, in particular a rotation shaft, for example.

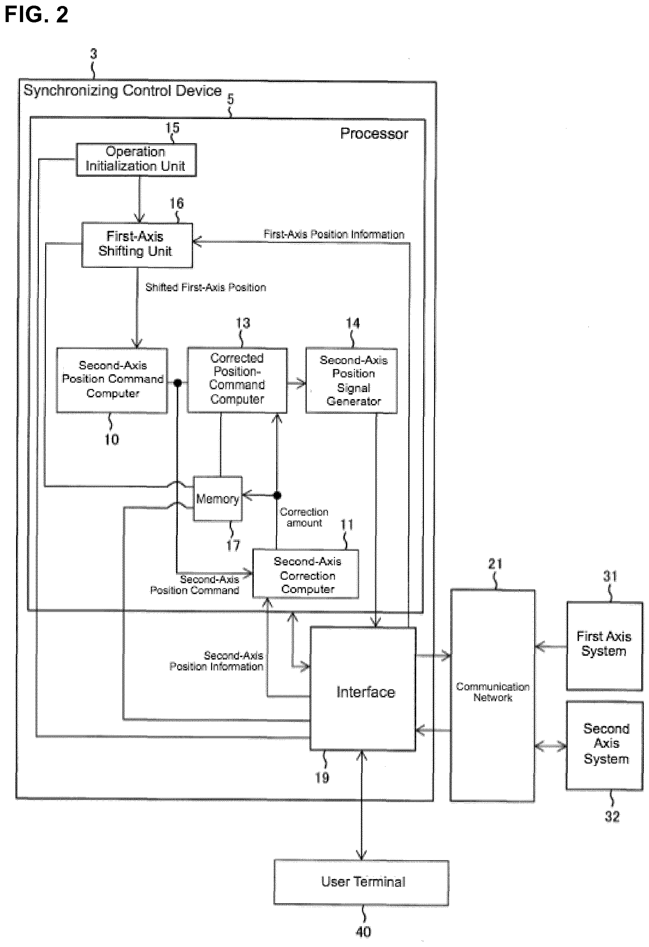

As illustrated in FIG. 2, the motion control system according to the first embodiment is provided with a synchronizing control device 3 which contains a processor 5 and an interface 19, a communication network 21, e.g., EtherCAT (Registered Trademark), a first axis system 31, and a second axis system 32; the synchronizing control device 3 is connected to a user terminal 40 (information processing device).

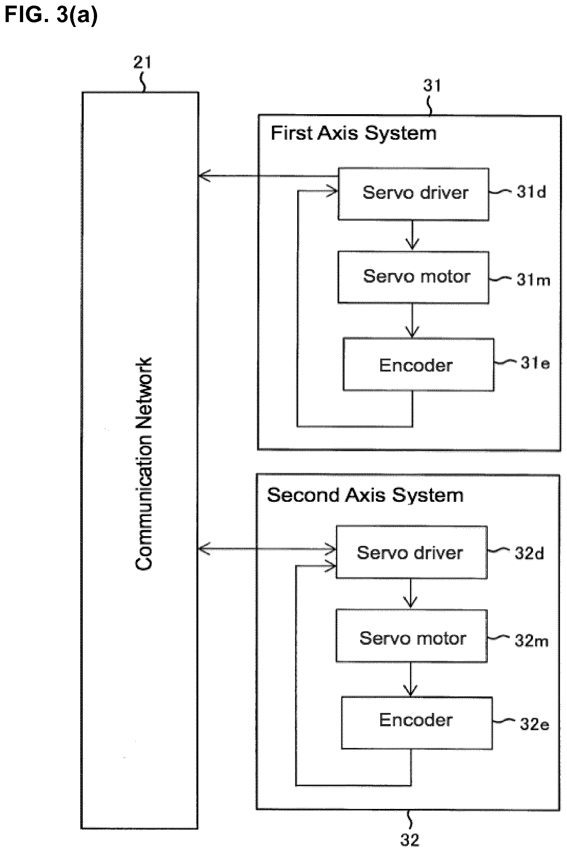

Here, as illustrated in FIG. 3(a), the first axis system 31 contains a servo driver 31d, a servo motor 31m that serves as the first axis, and an encoder 31e (signal generator); the servo driver 31d drives the servo motor 31m, and the encoder 31e transmits a signal representing the position of the servo motor 31m to the communication network 21. In addition, the second axis system 32 contains a servo driver 32d, a servo motor 32m that serves as the second axis, and an encoder 32e (signal generator); the servo driver 32d drives the servo motor 32m, and the encoder 32e transmits a signal representing the position of the servo motor 32m to the communication network 21.

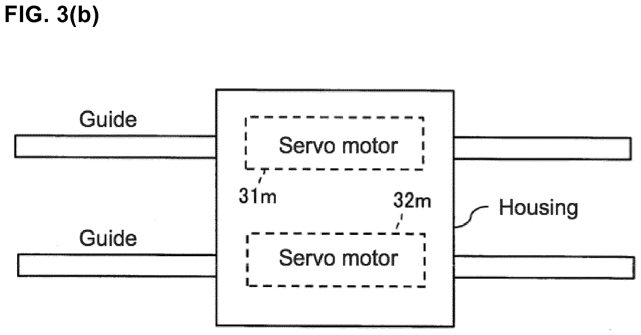

Note that as illustrated in FIG. 3(b), the servo motor 31m in the first axis system 31, and the servo motor 32m in the second axis system 32 are mechanically secured by the same housing; the two servo motors 31m, 32m which are the first axis and the second axis are coordinated on guides for parallel movement (gantry mechanism).

Returning to FIG. 2, the processor 5 contains a memory 17, and also includes: a second-axis position-command computer 10, a second-axis correction computer 11, a corrected position-command computer 13, a second-axis position signal generator 14, an operation initialization unit 15, and a first-axis shifting unit 16 as function blocks. In other words, the processor 5 implements each of these functions by executing a motion control program.

The first axis system 31 and the second axis system 32 are each connected to the processor 19 via the communication network 21 and the interface 19. The user terminal 40 is connected to the processor 5 via the interface 19.

The first axis system 31 transmits first-axis position information (i.e. angles and distances based on pulse signals from the encoder 31e) to the first-axis shifting unit 16 via the communication network 21 and the interface 19. The second axis system 32 transmits second-axis position information (i.e., angles and distances corresponding to pulse signals from the encoder 32e) to the second-axis correction computer 11 via the communication network 21 and the interface 19.

The first-axis shifting unit 16 uses the first-axis position information, the time T1[N] and prep time T2[N] during a control cycle N (i.e., the travel distance of the first axis between T1 + T2) to compute a first-axis shift amount using, for example the first-axis speed Vm[N] during the control cycle N as illustrated in Formula 1.

$$\text{First-axis Shift Amount [N]} = Vm[N] \times (T1[N] + T2[N]) \quad \text{Formula 1}$$

Alternatively, the first-axis shift amount can be computed, for instance, using the average acceleration Am[N] of the first axis as illustrated by Formula 2.

$$\text{First-axis Shift Amount [N]} = Am[N] \times (T1[N] + T2[N])^2 / 2 \quad \text{Formula 2}$$

Here, the first-axis position is shifted by exactly the first-axis shift amount in the advancing direction to obtain the shifted first-axis position.
Note that, "first-axis shift amount [N]" indicates the first-axis shift amount during the control cycle N; the values of Vm[N], T1[N], and T2[N] are all related to the control cycle N.
The second-axis position-command computer 10 uses the shifted first-axis position, and the first-axis position information to compute a second-axis position command. For instance, when the computation protocol for establishing synchronization uses gear movement, the second-axis position command during the control cycle N can be obtained from Formula 3 using a gear ratio G.

$$\text{Second-axis Position Command [N]} = \text{Second-axis Position Command [N-1]} + G \times (\text{Shifted First-axis Position [N] - Shifted First-axis Position [N-1])} \quad \text{Formula 3}$$

Thus, the synchronization lag due to a delay on the first axis (T1 + T2) during the control cycle N can be compensated for in this manner by using the shifted first-axis position.
The second-axis direction computer 11 uses a second-axis approximate speed command Vs[N] for a control cycle N computed from the second-axis position command, and the time T3 and the time T4 (i.e., a travel distance for the second axis between T3[N] + T4[N]) to compute a correction amount during the control cycle N using, for instance, Formula 4.

$$\text{Second-axis Correction Amount [N]} = Vs[N] \times (T3[N] + T4[N]) \quad \text{Formula 4}$$

Alternatively, a second-axis acceleration command As[N] can be calculated for the control cycle [N].

$$\text{Second-axis Correction Amount [N]} = As[N] \times (T3[N] + T4[N])^2 / 2 \quad \text{Formula 5}$$

The corrected position-command computer 13 back tracks the second-axis position command by the correction amount, setting that position as the corrected position command; the corrected position-command computer 13 inputs the corrected position command into the second-axis position signal generator 14, and notifies the memory 17 and the user program on the user terminal 40 of the correction amount and the corrected position command.
The second-axis position signal generator 14 uses the corrected position command and the second-axis position information to generate a second-axis position signal.
Here, when the speed based on the second-axis position signal is less than the maximum speed on the second axis, this second-axis position signal is entered (transmitted) to the second axis system 32 via the interface 19 and the communication network 21. The second-axis position signal is reflected in the second axis system a time T4 after entering the second axis system 32.
When the speed based on the second-axis position signal exceeds the maximum speed of the second axis, the processor further determines whether or not the residual travel distance that remains even when the second axis travels at the maximum speed is within a defined amount; if within the defined amount the processor resets the second-axis position signal to a value based on the maximum speed and inputs the value into the second axis system 32. In this case the residual travel distance is forwarded to a subsequent cycle. Note that if the residual travel distance is a defined amount or greater, the processor determines that there was a malfunction and stops the operation on the second axis system 32.
Thus, the processor back tracks the second-axis position command by the correction amount to compute the corrected position command, and the synchronizing control device compensates for the synchronization lag due to the delay on the second axis (T3 + T4) in this manner by inputting a second-axis position signal based on the corrected position command into the second axis system 32.

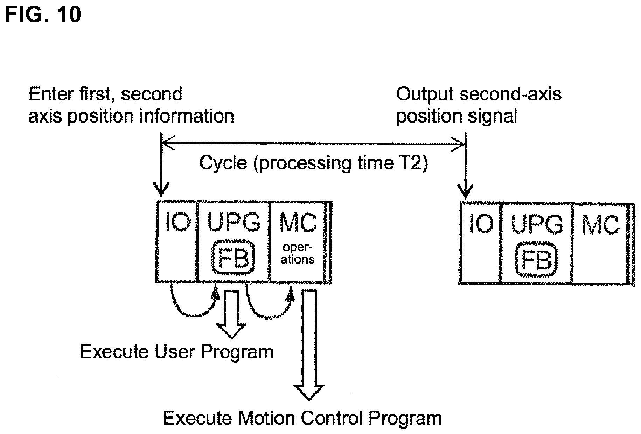

As illustrated in FIG. 10, the time T2 represents the processing cycle in the processor. The processor 5 first acquires position information and the like from the first axis and the second axis during an I/O period, executes a user program and runs motion control commands FB during a UPG period (the output variables from the motion control commands are updated at this time), executes motion computations using the motion control program in accordance with the motion control commands FB and generates instructions such as the second-axis position signal during an MC period, and outputs (sends) the second-axis position signal during the I/O period in the next cycle.

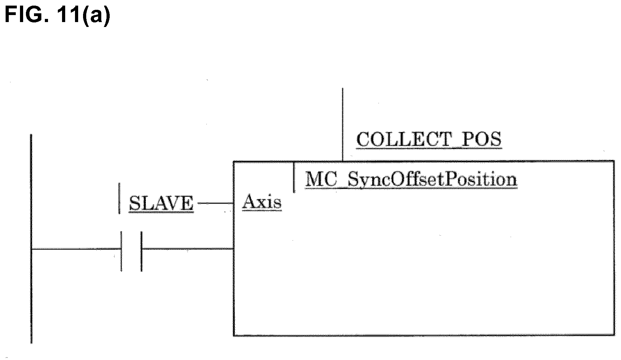

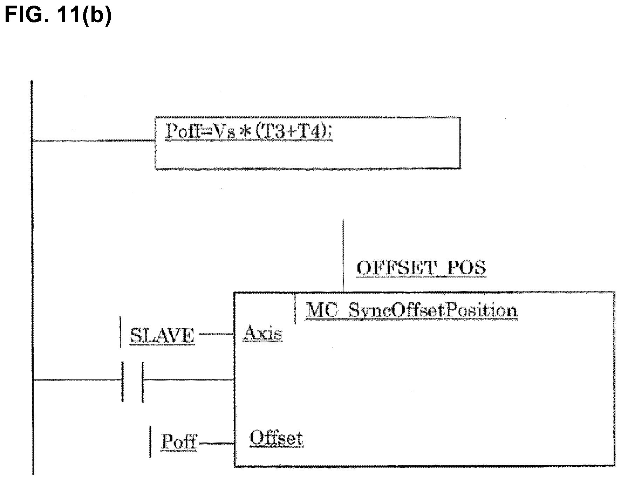

The second axis correction amount may be carried out during the MC computations illustrated in FIG. 10. A user may utilize the function blocks (FB) illustrated in FIG. 10 to correct the delay on the second axis; however, FIG. 11(a) depicts an implementation of the function blocks in this case.

FIG. 11(a) illustrates one example of a user program that can be run on a control device according to the embodiment. As illustrated in FIG. 11(a), the user program is defined in the form of a ladder program and includes a function block FB. The function block FB includes commands for specifying the supporting library program (or, code corresponding to the library program) that is called and executed when the execution sequence arrives at the function block FB. In other words, a library program, which is the program content corresponding to the function block is prepared in advance, and the processor calls and executes the library program as appropriate in accordance with the program. Here, only an axis variable for the second axis, e.g., a position command for the second axis which is included as a member variable in the data structure, is specified as an input to the function block. The second-axis correction amount is computed with internal processes in the function block, or MC computations directed through the execution contents of the function block.

Additionally, the second-axis correction amount may be computed with the user program (UPG) presented in FIG. 10. In this case, the position command for the second axis, and the second-axis correction amount are specified as input values in the function block illustrated in FIG. 1 1(b). The axis variable and the second-axis correction amount are specified as input for the function block after correcting the second-axis position command and before executing the function block.

Note that to measure the times T1 to T4, should the procedure described in Japanese Utility Patent No. 4894961 be used, a transmission through the communication circuit can be performed within a fixed control cycle; therefore, the delay during T1 to T3 can be calculated from the control cycle used by the communication circuit. Moreover, T4 can be identified by a change in the second-axis encoder when commands to second axis are provided as stepped output.

Given that the previous correction amount and corrected position command are saved in the memory 17, the second axis system 32 can stay at the most recent corrected position command even if output of the second-axis position signal is forcibly stopped for some reason. The user can also monitor the correction amount and the corrected position command sent to the user program during each cycle.

When a synchronization operation starts, the operation initialization unit 15 determines whether the second axis system 32 should operate using the most recent corrected position command, or should operate using the most recent uncorrected second-axis position command in accordance with a default setting or user input.

The operation initialization unit 15 further determines which positioned command is being used by the second axis system when the second axis system 32 begins operations; if there is a malfunction the operation initialization unit 15 provides external notification to that effect and does not initiate operation of the second axis system 32. Finally the operation initialization unit 15 resets the correction amount stored in the memory 17 to zero when the second axis system 32 starts operations besides synchronizing with the first axis system 31.

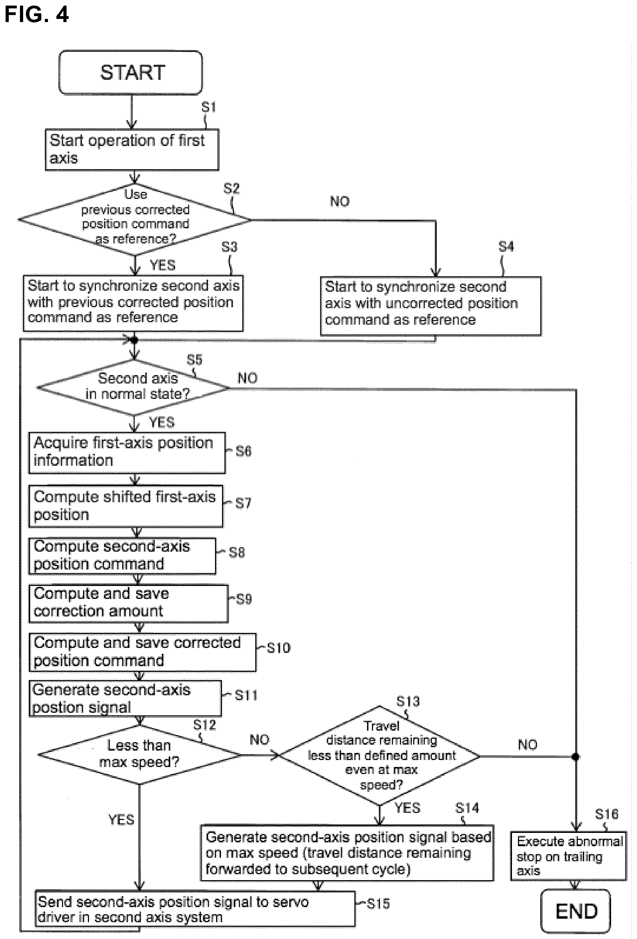

The flow chart in FIG. 4 illustrates the processing steps executed in the above-described processor 5. On execution of the motion control program the processor 5 executes the following processes.

First, the processor starts the operations on the first axis in step S1; in step S2 the processor determines whether or not the operation of the second axis system 32 should be executed based on the previous corrected position command. If YES in step S2, the processor starts operations on the second axis based on the previous corrected position command (step S3). If NO in step S2, the processor starts operations on the second axis based on the previous uncorrected position command (step S4).

Control proceeds to step S5, and the processor determines whether or not the second axis is in a normal state. If NO at step S5, control proceeds to step S16 and the second axis is placed in an abnormal stop (END). If YES at step S5, the processor acquires the first-axis position information (step S6).

Subsequently, the processor computes the shifted first-axis position (step S7). Next, the processor computes the second-axis position command (step S8). The processor then computes and saves the correction amount (step S9). The processor then computes and saves the corrected position command (step S10).

Subsequently the processor generates a second-axis position signal (step S11). Next, the processor determines whether or not the maximum speed is exceeded in step S12, if the determination is YES at step S12, the processor sends the second-axis position signal to the servo driver on the second axis (S15). If NO at S12, the processor further determines whether or not the excess travel distance is less than a defined amount (step S13). If NO at step S13, control proceeds to step S16 and the second axis is placed in an abnormal stop (END). If YES at step S13, control proceeds to step S14 where the processor resets the second-axis position signal to a value based on the maximum speed (with the excess travel distance forwarded to the subsequent cycle), and sends the reset second-axis position signal to the servo driver in the second axis system 32 (step S15).

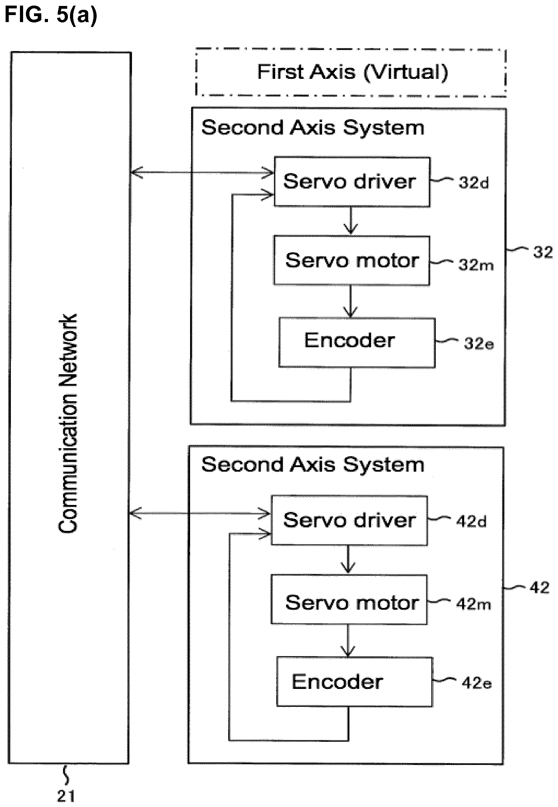

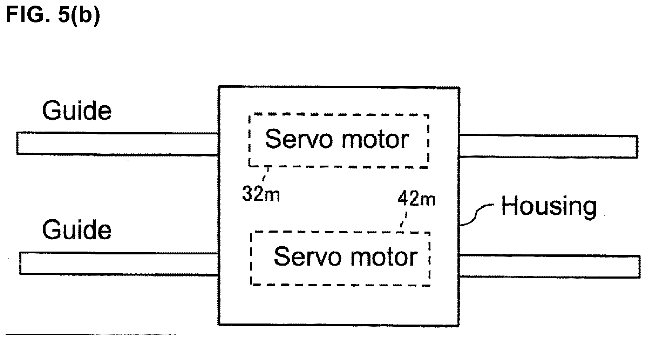

The above explanation was made on the assumption that the first axis system is a real object, however the embodiments are not limited thereto. The first axis may be a virtual object (a virtual first axis created by the processor 5) as illustrated in FIG. 5.T Namely, the second axis system 32 contains a servo driver 32d, a servo motor 32m (second axis), and an encoder 32e (signal generator), and the second axis system 42 contains a servo driver 42d, a servo motor 42m (second axis), and an encoder 42e (signal generator); the servo motor 32m in the second axis system 32, and the servo motor 42m in the second axis system 42 are mechanically secured by the same housing, with the servo motors 32m, 42m coordinated on guides for parallel movement (gantry mechanism).

In this case shifting the first axis position is unnecessary; therefore step S7 (FIG. 4) is executed in the first-axis shifting unit 16 with the first-axis shift amount set to zero.

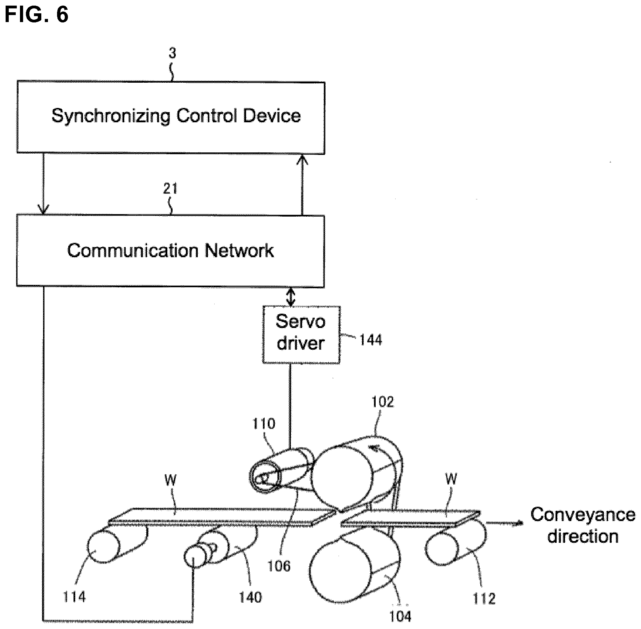

The first and second axis systems may be configured as illustrated in FIG. 6 in the motion control system 1 according to the first embodiment. Namely, the first axis system contains workpieces W that are moving parallel, conveyor motors 112, 114 for moving the workpieces, and a measuring roll 140 (first axis) for measuring the position information for the workpieces W. The second axis system contains rotary cutters 102, 104 that rotate, a servo motor 110 (second axis) that uses a belt to rotate the rotary cutters 102, 104 in sync, and a servo driver 144 that drives the servo motor 110. The rotary cutters 102, 104 are rotated in sync and use a blade formed on one portion on the periphery thereof to cut the workpiece W.

The first axis position information (rotation angle) detected by the measuring role 140, and the second axis position information (rotation angle) from the servo motor 110 are entered in the processor 5 in the synchronizing control device 3 (refer to FIG. 2) via the communication network 21. The processing performed by the processor 5 is as above described.

Second Embodiment

The second embodiment compensates for the synchronization lag due to the delay on the first axis (T1 + T2), and the synchronization lag due to the delay on the second axis (T3 + T4) collectively.

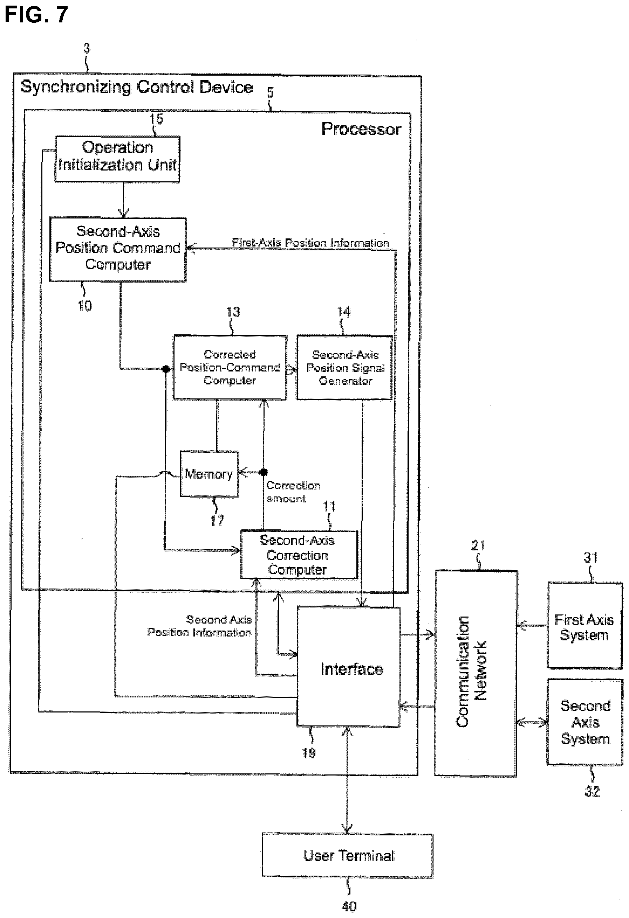

As illustrated in FIG. 7, the processor 5 in the synchronizing control device 3 according to the second embodiment contains a memory 17, and also includes: a second-axis position-command computer 10, a second-axis correction computer 11, a corrected position-command computer 13, a second-axis position signal generator 14, and an operation initialization unit 15 as function blocks. The first axis system 31 and the second axis system 32 are connected to the processor 5 via the communication network 21 and the interface 19; the user terminal 40 is connected to the processor 5 by the interface 19.

The first axis system 31 transmits first-axis position information to the second-axis position-command computer 10 via the communication network 21 and the interface 19. The second axis system 32 transmits second-axis position information to the second-axis correction computer 11 via the communication network 21 and the interface 19.

The second-axis position-command computer 10 uses the time T1 and the time T2, and the first-axis position information to compute a second-axis position command. Here, the second-axis position command is computed after the first axis position is advanced by the travel distance of the first axis during T1 + T2. The first-axis shift amount may be computed using the aforementioned Formula 1 and Formula 2. The synchronization lag due to the delay on the first axis (T1 + T2) can be compensated for in this manner.

The second-axis correction computer 11 uses the second-axis position command, the time T3 and time T4, and the first-axis position information and the second-axis position information to compute a correction amount (i.e., the travel distance of the second axis during T3 + T4). For instance, the second-axis position command may be computed using the aforementioned Formula 3; further, the second-axis correction amount may be computed using the aforementioned Formula 4 or Formula 5.

The corrected position-command computer 13 back tracks the second-axis position command by the correction amount, setting that position as the corrected position command; the corrected position-command computer 13 inputs the corrected position command into the second-axis position signal generator 14, and notifies the memory 17 and the user program on the user terminal 40 with the correction amount and the corrected position command.

The second-axis position signal generator 14 uses the corrected position command and the second-axis position information to generate a second-axis position signal.

Here, when the second-axis position signal is less than the maximum speed on the second axis, this second-axis position signal is entered (transmitted) to the second axis system 32 via the interface 19 and the communication network 21. The second-axis position signal is reflected in the second axis system a time T4 (the delay time on the second axis) after entering the second axis system 32.

When the speed based on the second-axis position signal exceeds the maximum speed of the second axis, the processor further determines whether or not the residual travel distance that remains even when the second axis travels at the maximum speed is within a defined amount; if within the defined amount the processor resets the second-axis position signal to a value based on the maximum speed and inputs the value into the second axis system 32. In this case the residual travel distance is forwarded to a subsequent cycle. Note that if the residual travel distance is a defined amount or greater, the processor determines that there was a malfunction and stops the operation on the second axis system 32.

Thus, the processor back tracks the second-axis position command by the correction amount to compute the corrected position command, and the synchronizing control device compensates for the synchronization lag due to the delay on the second axis (T3 + T4) in this manner by inputting a second-axis position signal based on the corrected position command into the second axis system 32.

When a synchronization operation starts, the operation initialization unit 15 determines whether the second axis system 32 should operate using the most recent corrected position command, or should operate using the most recent uncorrected second-axis position command in accordance with a default setting or user input.

The operation initialization unit 15 further determines which positioned command is being used by the second axis system when the second axis system 32 begins operations; if there is a malfunction the operation initialization unit 15 provides external notification to that effect and does not initiate operation of the second axis system 32. Finally the operation initialization unit 15 resets the correction amount stored in the memory 17 to zero when the second axis system 32 starts operations besides synchronizing with the first axis system 31.

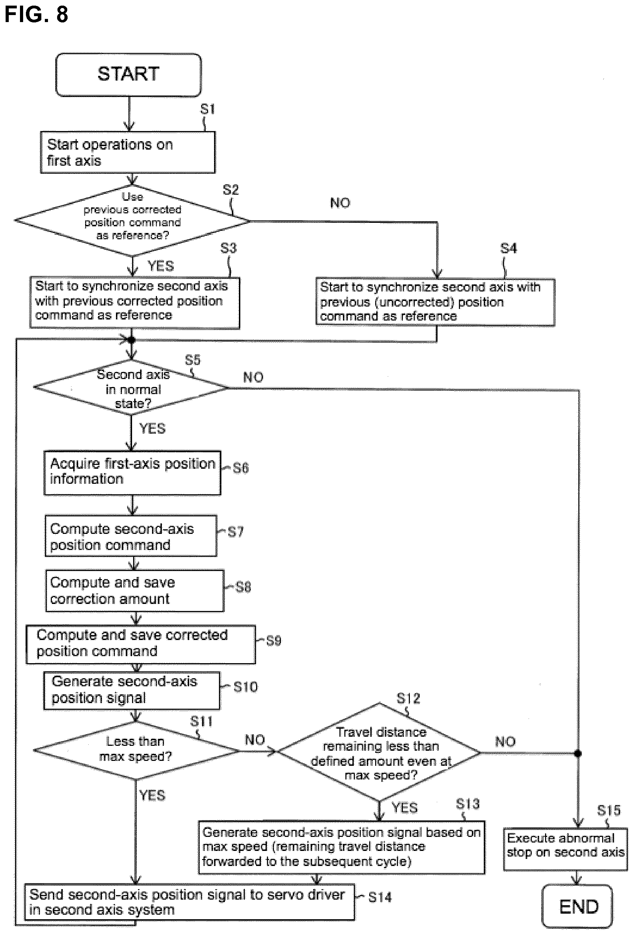

The flow chart in FIG. 8 illustrates the processing steps executed in the above-described processor 5.

First, the processor starts operations on the first axis in step S1; in step S2 the processor determines whether or not the operation of the second axis system 32 should be executed based on the most recent corrected position command. If YES in step S2, the processor starts operations on the second axis based on the most recent corrected position command (step S3). If NO in step S2, the processor starts operations on the second axis based on the most recent uncorrected position command (step S4).

Control proceeds to step S5, and the processor determines whether or not the second axis is in a normal state. If NO at step S5, control proceeds to step S15 and the second axis is placed in an abnormal stop (END). If YES at step S5, the processor acquires the first-axis position information (step S6).

Next, the processor computes the second-axis position command (step S7). The processor then computes and saves the correction amount (step S8). The processor then computes and saves the corrected position command (step S9).

Subsequently the processor generates a second-axis position signal (step S10). Next, the processor determines whether or not the maximum speed based is exceeded in step S11, if the determination is YES at step S11, the processor sends the second-axis position signal to the servo driver on the second axis (S14). If NO at S11, the processor further determines whether or not the excess travel distance is less than a defined amount (step S13). If NO at step S12, control proceeds to step S15 and the second axis is placed in an abnormal stop (END). If YES at step S12, control proceeds to step S13 where the processor resets the second-axis position signal to a value based on the maximum speed (with the excess travel distance forwarded to the subsequent cycle), and sends the reset second-axis position signal to the servo driver in the second axis system (step S14).

Note that in the second embodiment the first axis system and the second axis system may be configured as illustrated in FIG. 5 or FIG. 6.

Third Embodiment

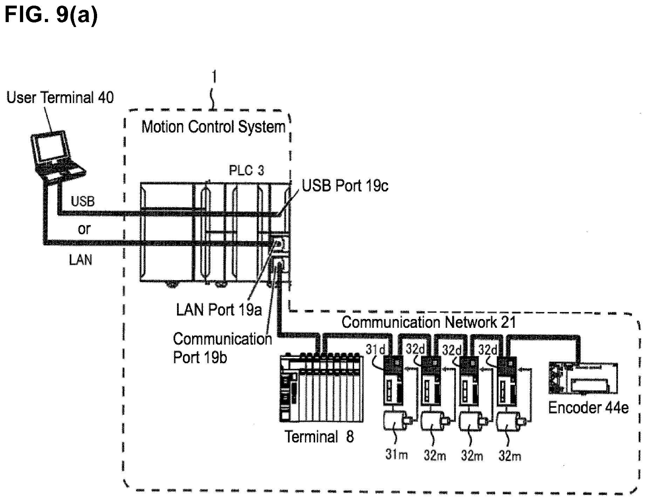

As illustrated in FIG. 9(a), a motion control system 1 according to the third embodiment is provided with a programmable logic controller (PLC, 3) including a processor (not shown), a communication network 21 e.g., EtherCAT (Registered Trademark) containing a terminal 8, a servo motor 31m which is the first axis, and a servo driver 31d driving the servo motor 31m, three servo motors 32m which are second axes, and three servo drivers 32d driving the three servo motors 32m, and an encoder 44e.

Here, the communication port 19a of the PLC 3 is connected to the terminal 8 on the communication network 21, and the USB port 19a or the LAN port 19b of the PLC 3 is connected to the user terminal 40 (information processing device); the encoder 44e sends the PLC 3 the position information and the like for the servo motors 31m, 32m which are the first and second axes respectively via the communication network 21.

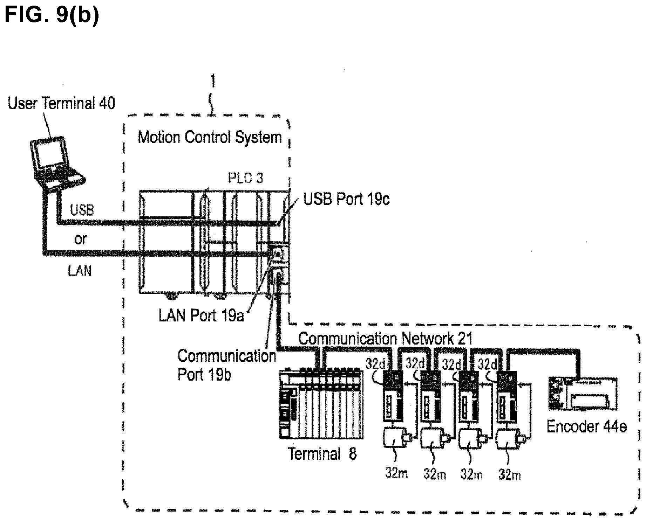

Note that the processing in the processor of the PLC 3 is identical to the processing carried out by the processor 5 exemplified in the first and second embodiments. The processor in the PLC 3 may create a virtual first axis; in this case, the configuration providing four servo motors 32m as second axes is also possible as illustrated in FIG. 9(b).

As above described the control device synchronizes a second axis to a first axis; the control device is provided with a processor configured to use position information for the first axis to compute a position command for the second axis, and to correct the position command when outputting the position command to the second axis to compensate for a delay caused by the transmission of the position command from the control device to the second axis and a delay on the second axis.

In another configuration the processor corrects the position command using the position command, position information for the second axis, a transmission time which is the time required for transmission of the output, and the delay time on the second axis.

The control device may further include a memory for storing a correction amount related to the correction of the position command, and a corrected position command. Additionally, the second axis may be configured to stay at the most recent corrected position command, when output from the processor is forcibly terminated.

In another configuration, the control device selects from correcting the position command with reference to the most recent corrected position command or correcting the position command with reference to the most recent uncorrected position command when output is restarted after forcible termination thereof.

In another configuration, the processor resets the correction amount stored in the memory to zero when executing operations other than operations to synchronize the second axis with the first axis.

In another configuration the processor carries out a correction using a computation formula including the position command and the position information for the second axis as parameters.

In another configuration of the control device, the processor references a table defining the relationship between the position information for the second axis and a correction amount when the delay time on the second axis differs due to the second axis position.

In another configuration, when the position information for the second axis is not described in a table defining the relationship between the position information for the second axis and a correction amount, the processor uses linear interpolation or curve interpolation to compute a correction amount when correcting the position command.

In another configuration of the control device, the processor notifies a user program of the correction amount when correcting a position command.

In another configuration of the control device, based on the control device described in claim 1, the output from the processor is a signal representing the position command for the second axis. When the speed of the second axis based on the position command is greater than the maximum speed of the second axis, the processor sets the position command based on the maximum speed, and taking into account travel of the second axis at the maximum speed, forwards the travel distance remaining to a subsequent correction.

In another configuration of the control device, the processor halts operations on the second axis assuming there is a malfunction when the travel distance remaining when the second axis travels at the maximum speed exceeds a fixed amount.

In another configuration of the control device, the first axis and the second axis are each connected to the processor via a network, and the processor shifts the position of the first axis virtually to compensate for the synchronization lag generated due to the time needed for position information for the first axis to be entered in the processor via the network, and the time needed from the processor receives the position information for the first axis until the processor outputs the position command.

In another configuration of the control device, the first axis and the second axis are each connected to the processor via a network, and the processor corrects the position command to compensate for the synchronization lag generated due to the time needed for position information for the first axis to be entered in the processor via the network, the time needed from the processor receiving the position information for the first axis until the processor outputs the position command, the time needed for the output to be entered into the second axis via the network, and the delay time on the second axis.

A method of synchronizing control involves computing a position command for a second axis using position information for a first axis, and providing an output to the second axis corresponding to the position command, to thereby synchronize the second axis with the first axis; and correcting the position command to compensate for the synchronization lag caused by the transmission of the output, and the delay time on the second axis.

Industrial Applicability

The control device according to the present invention is suitable for a factory automation (FA) device for example.

Reference Numerals

| | |
|---|---|
| 1 | Motion Control System |
| 3 | Synchronizing control device (PLC) |
| 5 | Processor |
| 10 | Second-Axis Position Command Computer |
| 11 | Second-Axis Correction Computer |
| 13 | Corrected Position-Command Computer |
| 14 | Second-Axis Position Signal Generator |
| 15 | Operation Initialization Unit |
| 16 | First-Axis Shifting Unit |
| 17 | Memory |
| 19 | Interface |
| 21 | Communication Network |
| 31 | First Axis System |
| 31m | Servo motor (first axis) |
| 32 | Second Axis System |
| 32m | Servo motor (second axis) |
| 40 | User Terminal |
| 110 | Servo motor (second axis) |
| 140 | Measuring roll (first axis) |

**Claims**

1. A control device (3) configured to synchronize a second axis (32, 42) with a first axis (31), wherein the first axis (32, 42) and the second axis (31) each refer to a shaft respectively, the control device (3) comprising:

   a processor (5) configured to use position information for the first axis (31) to compute a position command for the second axis (32, 42), and to correct the position command when outputting the position command to the second axis (32, 42) to compensate for a delay caused by the transmission of the position command from the control device (3) to the second axis (32, 42), and a response delay time on the second axis (32, 42), the control device (3) being **characterized in that**
   when the speed of the second axis (32, 42) based on the position command is greater than the maximum speed of the second axis (32, 42), the processor (5) is further configured to set the position command based on the maximum speed, and, taking into account travel of the second axis (32, 42) at the maximum speed, forward the remaining travel distance to a subsequent correction.

2. The control device (3) according to claim 1, wherein the processor (5) corrects the position command using the position command, position information for the second axis (32, 42), the transmission time (T1, T3) which is the time required for transmission of the output, and the delay time (T4) on the second axis (32, 42).

3. The control device (3) according to claim 1 or 2, further comprising: a memory (17) for storing a correction amount related to the correction of the position command, and a corrected position command; and
   when output from the processor (5) is forcibly terminated, the second axis (32, 42) is configured to stay at the most recent corrected position command.

4. The control device (3) according to claim 3, wherein the control device (3) is configured to select correcting the position command with reference to the most recent corrected position command or correcting the position command with reference to the most recent uncorrected position command when output is restarted after forcible termination thereof.

5. The control device (3) according to claim 3 or 4, wherein the processor (5) resets the correction amount stored in the memory (17) to zero when executing operations other than operations to synchronize the second axis (32, 42) with the first axis (31).

6. The control device (3) according to any of claims 2 to 5, wherein the processor (5) carries out a correction using a computation formula including the position command and the position information for the second axis (32, 42) as parameters.

7. The control device (3) according to any of claims 1 to 6, wherein the processor (5) references a table defining the relationship between the position information for the second axis (32, 42) and a correction amount when the delay time (T4) on the second axis (32, 42) differs due to the second axis (32, 42) position.

8. The control device (3) according to claim 7, wherein when the position information for the second axis (32, 42) is not described in the table, the processor (5) uses linear interpolation or curve interpolation to compute a correction amount when correcting the position command.

9. The control device (3) according to any of claims 1 to 8, wherein the processor (5) notifies a user program of the correction amount when correcting the position command.

10. The control device (3) according to any of claims 1 to 9, wherein the processor (5) halts operations on the second axis (32, 42) assuming there is a malfunction when the travel distance remaining when the second axis (32, 42) travels at the maximum speed exceeds a fixed amount.

11. The control device (3) according to any of claims 1 to 10, wherein the first axis (31) and the second axis (32, 42) are each configured to connect to the processor (5) via a network (21), and
the processor (5) shifts the position of the first axis (31) virtually to compensate for the synchronization lag generated due to the time (T1) needed for position information for the first axis (31) to be entered in the processor (5) via the network (21), and the time (T2) needed from the processor (5) receiving the position information for the first axis (31) until the processor (5) outputs the position command.

12. The control device (3) according to any of claims 1 to 11, wherein the first axis (31) and the second axis (32, 42) are each configured to connect to the processor (5) via a network (21), and
the processor (5) corrects the position command to compensate for the synchronization lag generated due to the time (T1) needed for position information for the first axis (31) to be entered in the processor (5) via the network (21), the time (T2) needed from the processor (5) receiving the position information for the first axis (31) until the processor (5) outputs the position command, the time (T3) needed for the output to be entered into the second axis (32, 42) via the network (21), and the delay time (T4) on the second axis (32, 42).

13. A method of synchronizing control comprising:

computing a position command for a second axis using position information for a first axis (S6, S7, S8; S6, S7), wherein the first axis and the second axis are each referring to a shaft respectively, and providing an output to the second axis corresponding to the position command (S11, S15; S10, S14), to thereby synchronize the second axis (32, 42) with the first axis (31);
correcting the position command to compensate for the synchronization lag caused by a transmission of the output of the position command to the second axis, and a response delay time on the second axis (S9, S10; S8, S9); and,
when the speed of the second axis (32, 42) based on the position command is greater than the maximum speed of the second axis (32, 42), setting the position command based on the maximum speed, and, taking into account travel of the second axis (32, 42) at the maximum speed, forwarding the remaining travel distance to a subsequent correction.

**Patentansprüche**

1. Steuereinrichtung (3), dazu eingerichtet, eine zweite Achse (32, 42) mit einer ersten Achse (31) zu synchronisieren, wobei die erste Achse (32, 42) und die zweite Achse (31) sich auf eine jeweilige mechanische Achse bzw. Welle beziehen,
wobei die Steuereinrichtung (3) aufweist:

einen Prozessor (5), der dazu eingerichtet ist, Positionsinformationen für die erste Achse (31) zu benutzen, um einen Positionsbefehl für die zweite Achse (32, 42) zu berechnen, und den Positionsbefehl beim Ausgeben des Positionsbefehls an die zweite Achse (32, 42) zu korrigieren, um eine Verzögerung, die durch die Übertragung des Positionsbefehls von der Steuereinrichtung (3) an die zweite Achse (32, 42) verursacht wird, sowie eine Ansprechverzögerungszeit auf der zweiten Achse (32, 42) zu kompensieren,
wobei die Steuereinrichtung (3) **dadurch gekennzeichnet ist, dass**,

wenn die Geschwindigkeit der zweiten Achse (32, 42) basierend auf dem Positionsbefehl größer als die maximale Geschwindigkeit der zweiten Achse (32, 42) ist, der Prozessor (5) ferner dazu eingerichtet ist, den Positionsbefehl basierend auf der maximalen Geschwindigkeit einzustellen, und, unter Berücksichtigung des Laufs der zweiten Achse (32, 42) mit der maximalen Geschwindigkeit, die verbleibende Laufdistanz an eine nachfolgende Korrektur weiterzugeben.

2. Steuereinrichtung (3) nach Anspruch 1, wobei der Prozessor (5) den Positionsbefehl unter Verwendung des Positionsbefehls, von Positionsinformationen für die zweite Achse (32, 42), der Übertragungszeit (T1, T3), bei welcher es sich um die für die Übertragung der Ausgabe erforderliche Zeit handelt, und der Verzögerungszeit (T4) auf der zweiten Achse (32, 42) korrigiert.

3. Steuereinrichtung (3) nach Anspruch 1 oder 2, ferner mit einem Speicher (17) zum Speichern eines Korrekturbetrags in Bezug auf die Korrektur des Positionsbefehls und eines korrigierten Positionsbefehls; und
wenn die Ausgabe des Prozessors (5) zwangsweise beendet wird, die zweite Achse (32, 42) dazu eingerichtet ist, bei dem aktuellsten korrigierten Positionsbefehl zu verbleiben.

4. Steuereinrichtung (3) nach Anspruch 3, wobei die Steuereinrichtung (3) dazu eingerichtet ist, wenn die Ausgabe nach ihrer zwangsweisen Beendigung neu gestartet wird, auszuwählen zwischen Korrigieren des Positionsbefehls unter Bezugnahme auf den aktuellsten korrigierten Positionsbefehl oder Korrigieren des Positionsbefehls unter Bezugnahme auf den aktuellsten nicht korrigierten Positionsbefehl.

5. Steuereinrichtung (3) nach Anspruch 3 oder 4, wobei der Prozessor (5) den in dem Speicher (17) gespeicherten Korrekturbetrag auf null zurücksetzt, wenn andere Vorgänge als Vorgänge zum Synchronisieren der zweiten Achse (32, 42) mit der ersten Achse (31) ausgeführt werden.

6. Steuereinrichtung (3) nach einem der Ansprüche 2 bis 5, wobei der Prozessor (5) eine Korrektur unter Verwendung einer Berechnungsformel ausführt, welche den Positionsbefehl und die Positionsinformationen für die zweite Achse (32, 42) als Parameter aufweist.

7. Steuereinrichtung (3) nach einem der Ansprüche 1 bis 6, wobei, wenn die Verzögerungszeit (T4) auf der zweiten Achse (32, 42) aufgrund der Position der zweiten Achse (32, 42) abweicht, der Prozessor (5) auf eine Tabelle Bezug nimmt, welche die Beziehung zwischen den Positionsinformationen für die zweite Achse (32, 42) und einem Korrekturbetrag definiert.

8. Steuereinrichtung (3) nach Anspruch 7, wobei, wenn die Positionsinformationen für die zweite Achse (32, 42) nicht in der Tabelle beschrieben sind, der Prozessor (5) beim Korrigieren des Positionsbefehls lineare Interpolation oder Kurveninterpolation verwendet, um einen Korrekturbetrag zu berechnen.

9. Steuereinrichtung (3) nach einem der Ansprüche 1 bis 8, wobei der Prozessor (5) beim Korrigieren des Positionsbefehls ein Benutzerprogramm über den Korrekturbetrag benachrichtigt.

10. Steuereinrichtung (3) nach einem der Ansprüche 1 bis 9, wobei der Prozessor (5) unter der Annahme des Vorliegens einer Fehlfunktion Vorgänge mit der zweiten Achse (32, 42) anhält, wenn die verbleibende Laufdistanz, wenn die zweite Achse (32, 42) mit der maximalen Geschwindigkeit läuft, einen festen Betrag übersteigt.

11. Steuereinrichtung (3) nach einem der Ansprüche 1 bis 10, wobei die erste Achse (31) und die zweite Achse (32, 42) jeweils dazu eingerichtet sind, über ein Netzwerk (21) mit dem Prozessor (5) verbunden zu sein, und
der Prozessor (5) die Position der ersten Achse (31) virtuell verschiebt, um den Synchronisationsnachlauf zu kompensieren, der aufgrund der Zeit (T1) entsteht, die benötigt wird, damit Positionsinformationen für die erste Achse (31) über das Netzwerk (21) den Prozessor (5) erreichen, sowie aufgrund der Zeit (T2), die von dem Zeitpunkt, zu dem der Prozessor (5) die Positionsinformationen für die erste Achse (31) empfängt, bis zu dem Zeitpunkt benötigt wird, zu dem der Prozessor (5) den Positionsbefehl ausgibt.

12. Steuereinrichtung (3) nach einem der Ansprüche 1 bis 11, wobei die erste Achse (31) und die zweite Achse (32, 42) jeweils dazu eingerichtet sind, über ein Netzwerk (21) mit dem Prozessor (5) verbunden zu sein, und
der Prozessor (5) den Positionsbefehl korrigiert, um den Synchronisationsnachlauf zu kompensieren, der aufgrund der Zeit (T1) entsteht, die benötigt wird, damit Positionsinformationen für die erste Achse (31) über das Netzwerk (21) den Prozessor (5) erreichen, aufgrund der Zeit (T2), die von dem Zeitpunkt, zu dem der Prozessor (5) die Positionsinformationen für die erste Achse (31) empfängt, bis zu dem Zeitpunkt benötigt wird, zu dem der Prozessor (5) den Positionsbefehl ausgibt, aufgrund der Zeit (T3), die benötigt wird, damit die Ausgabe über das Netzwerk (21) die zweite Achse (32, 42) erreicht, sowie aufgrund der Verzögerungszeit (T4) auf der zweiten Achse (32, 42).

**13.** Verfahren zum Synchronisieren einer Steuerung, umfassend:

Berechnen eines Positionsbefehls für eine zweite Achse unter Verwendung von Positionsinformationen für eine erste Achse (S6, S7, S8; S6, S7), wobei sich die erste Achse und die zweite Achse jeweils auf eine jeweilige mechanische Achse bzw. Welle beziehen, und Bereitstellen einer Ausgabe an die zweite Achse, welche dem Positionsbefehl entspricht (S11, S15; S10, S14), um dadurch die zweite Achse (32, 42) mit der ersten Achse (31) zu synchronisieren;
Korrigieren des Positionsbefehls, um den Synchronisationsnachlauf zu kompensieren, der durch eine Übertragung der Ausgabe des Positionsbefehls an die zweite Achse und eine Ansprechverzögerungszeit auf der zweiten Achse verursacht wird (S9, S10; S8, S9); und
wenn die Geschwindigkeit der zweiten Achse (32, 42) basierend auf dem Positionsbefehl größer als die maximale Geschwindigkeit der zweiten Achse (32, 42) ist, Einstellen des Positionsbefehls basierend auf der maximalen Geschwindigkeit, und, unter Berücksichtigung des Laufs der zweiten Achse (32, 42) mit der maximalen Geschwindigkeit, Weitergeben der verbleibenden Laufdistanz an eine nachfolgende Korrektur.

## Revendications

**1.** Dispositif de commande (3) configuré pour synchroniser un deuxième axe (32, 42) avec un premier axe (31), dans lequel le premier axe (32, 42) et le deuxième axe (31) font chacun respectivement référence à un arbre, le dispositif de commande (3) comprenant :

un processeur (5) configuré pour utiliser des informations de position pour le premier axe (31) pour calculer une instruction de position pour le deuxième axe (32, 42), et pour corriger l'instruction de position lors de l'émission en sortie de l'instruction de position pour le deuxième axe (32, 42) pour compenser un retard provoqué par la transmission de l'instruction de position du dispositif de commande (3) au deuxième axe (32, 42), et un temps de retard de réponse sur le deuxième axe (32, 42),
le dispositif de commande (3) étant **caractérisé en ce que**
lorsque la vitesse du deuxième axe (32, 42) sur la base de l'instruction de position est supérieure à la vitesse maximale du deuxième axe (32, 42), le processeur (5) est en outre configuré pour régler l'instruction de position sur la base de la vitesse maximale, et, en tenant compte de la course du deuxième axe (32, 42) à la vitesse maximale, transférer la distance de course restante à une correction ultérieure.

**2.** Dispositif de commande (3) selon la revendication 1, dans lequel le processeur (5) corrige l'instruction de position à l'aide de l'instruction de position, des informations de position pour le deuxième axe (32, 42), du temps de transmission (T1, T3) qui est le temps nécessaire pour la transmission de la sortie, et du temps de retard (T4) sur le deuxième axe (32, 42).

**3.** Dispositif de commande (3) selon la revendication 1 ou 2, comprenant en outre : une mémoire (17) pour stocker une quantité de correction liée à la correction de l'instruction de position, et une instruction de position corrigée ; et lorsque la sortie du processeur (5) est arrêtée de force, le deuxième axe (32, 42) est configuré pour rester à l'instruction de position corrigée la plus récente.

**4.** Dispositif de commande (3) selon la revendication 3, le dispositif de commande (3) étant configuré pour sélectionner la correction de l'instruction de position par rapport à l'instruction de position corrigée la plus récente ou la correction de l'instruction de position par rapport à l'instruction de position non corrigée la plus récente lorsque la sortie est remise en marche après son arrêt forcé.

**5.** Dispositif de commande (3) selon la revendication 3 ou 4, dans lequel le processeur (5) remet à zéro la quantité de correction stockée dans la mémoire (17) lors de l'exécution d'opérations autres que des opérations pour synchroniser le deuxième axe (32, 42) avec le premier axe (31).

**6.** Dispositif de commande (3) selon l'une quelconque des revendications 2 à 5, dans lequel le processeur (5) effectue une correction à l'aide d'une formule de calcul incluant l'instruction de position et les informations de position pour le deuxième axe (32, 42) comme paramètres.

7. Dispositif de commande (3) selon l'une quelconque des revendications 1 à 6, dans lequel le processeur (5) fait référence à un tableau définissant la relation entre les informations de position pour le deuxième axe (32, 42) et une quantité de correction lorsque le temps de retard (T4) sur le deuxième axe (32, 42) est différent en raison de la position du deuxième axe (32, 42).

8. Dispositif de commande (3) selon la revendication 7, dans lequel, lorsque les informations de position pour le deuxième axe (32, 42) ne sont pas décrites dans le tableau, le processeur (5) utilise une interpolation linéaire ou une interpolation de courbe pour calculer une quantité de correction lors de la correction de l'instruction de position.

9. Dispositif de commande (3) selon l'une quelconque des revendications 1 à 8, dans lequel le processeur (5) informe un programme utilisateur de la quantité de correction lors de la correction de l'instruction de position.

10. Dispositif de commande (3) selon l'une quelconque des revendications 1 à 9, dans lequel le processeur (5) stoppe les opérations sur le deuxième axe (32, 42) en supposant qu'il y a un dysfonctionnement lorsque la distance de course restante lorsque le deuxième axe (32, 42) se déplace à la vitesse maximale dépasse une quantité fixée.

11. Dispositif de commande (3) selon l'une quelconque des revendications 1 à 10, dans lequel le premier axe (31) et le deuxième axe (32, 42) sont chacun configurés pour être connectés au processeur (5) par le biais d'un réseau (21), et le processeur (5) déplace la position du premier axe (31) pour compenser quasiment le décalage de synchronisation généré en raison du temps (T1) nécessaire pour que les informations de position pour le premier axe (31) soient entrées dans le processeur (5) par le biais du réseau (21), et du temps (T2) nécessaire allant du moment où le processeur (5) reçoit les informations de position pour le premier axe (31) au moment où le processeur (5) émet en sortie l'instruction de position.

12. Dispositif de commande (3) selon l'une quelconque des revendications 1 à 11, dans lequel le premier axe (31) et le deuxième axe (32, 42) sont chacun configurés pour être connectés au processeur (5) par le biais d'un réseau (21), et le processeur (5) corrige l'instruction de position pour compenser le décalage de synchronisation généré en raison du temps (T1) nécessaire pour que les informations de position pour le premier axe (31) soient entrées dans le processeur (5) par le biais du réseau (21), du temps (T2) nécessaire allant du moment où processeur (5) reçoit les informations de position pour le premier axe (31) au moment où le processeur (5) émet en sortie l'instruction de position, du temps (T3) nécessaire pour que la sortie soit entrée dans le deuxième axe (32, 42) par le biais du réseau (21), et du temps de retard (T4) sur le deuxième axe (32, 42).

13. Procédé de commande de synchronisation comprenant :

calculer une instruction de position pour un deuxième axe à l'aide des informations de position pour un premier axe (S6, S7, S8 ; S6, S7), dans lequel le premier axe et le deuxième axe se réfèrent chacun respectivement à un arbre, et fournir une sortie au deuxième axe correspondant à l'instruction de position (S11, S15 ; S10, S14), pour ainsi synchroniser le deuxième axe (32, 42) avec le premier axe (31) ;
corriger l'instruction de position pour compenser le décalage de synchronisation provoqué par une transmission de la sortie de l'instruction de position au deuxième axe, et un temps de retard de réponse sur le deuxième axe (S9, S10 ; S8, S9) ; et,
lorsque la vitesse du deuxième axe (32, 42) sur la base de l'instruction de position est supérieure à la vitesse maximale du deuxième axe (32, 42), régler l'instruction de position sur la base de la vitesse maximale, et, en tenant compte de la course du deuxième axe (32, 42) à la vitesse maximale, transférer la distance de course restante à une correction ultérieure.

FIG. 1(a)

1

21

31

Synchronizing
Control Device

Communication
Network

First Axis
System

3

Second
Axis
System

32

# FIG. 1(b)

Synchronizing Control Device

Processing Time

Send second-axis position signal

First Axis Position

Communication Network

Transmission Time

Transmission Time

First Axis Position

First Axis System

Enter second-axis position signal

Second Axis System

Response Time

T1 — T2 — T3 — T4

Detect first axis position

Reflect in second-axis position signal

# FIG. 2

## FIG. 3(a)

FIG. 3(b)

Guide

Servo motor

31m                              32m                    Housing

Guide

Servo motor

# FIG. 4

START

S1
Start operation of first axis

S2 — Use previous corrected position command as reference?

YES → S3
Start to synchronize second axis with previous corrected position command as reference

NO → S4
Start to synchronize second axis with uncorrected position command as reference

S5 — Second axis in normal state?

YES ↓

S6 — Acquire first-axis position information

S7 — Compute shifted first-axis position

S8 — Compute second-axis position command

S9 — Compute and save correction amount

S10 — Compute and save corrected position command

S11 — Generate second-axis postion signal

S12 — Less than max speed?

NO → S13 — Travel distance remaining less than defined amount even at max speed?

YES → S14 — Generate second-axis position signal based on max speed (travel distance remaining forwarded to subsequent cycle)

S12 YES ↓

S15 — Send second-axis position signal to servo driver in second axis system

S5 NO → S13 NO →

S16 — Execute abnormal stop on trailing axis

END

# FIG. 5(a)

# FIG. 5(b)

Guide

Servo motor

32m          42m          Housing

Guide

Servo motor

# FIG. 6

EP 3 065 012 B1

# FIG. 7

# FIG. 8

START

S1 — Start operations on first axis

S2 — Use previous corrected position command as reference?

NO → S4 — Start to synchronize second axis with previous (uncorrected) position command as reference

YES → S3 — Start to synchronize second axis with previous corrected position command as reference

S5 — Second axis in normal state?

NO → S15 — Execute abnormal stop on second axis → END

YES → S6 — Acquire first-axis position information

S7 — Compute second-axis position command

S8 — Compute and save correction amount

S9 — Compute and save corrected position command

S10 — Generate second-axis position signal

S11 — Less than max speed?

NO → S12 — Travel distance remaining less than defined amount even at max speed?

NO → S15

YES → S13 — Generate second-axis position signal based on max speed (remaining travel distance forwarded to the subsequent cycle)

S11 YES / S13 → S14 — Send second-axis position signal to servo driver in second axis system

# FIG. 9(a)

# FIG. 9(b)

User Terminal 40

Motion Control System

PLC 3

USB Port 19c

USB

or

LAN

LAN Port 19a

Communication
Port 19b

Communication Network 21

32d  32d  32d  32d

Terminal 8

Encoder 44e

32m  32m  32m  32m

# FIG. 10

Enter first, second
axis position information

Output second-axis
position signal

Cycle (processing time T2)

IO | UPG | MC
FB | oper-ations

IO | UPG | MC
FB

Execute User Program

Execute Motion Control Program

**FIG. 11(a)**

**FIG. 11(b)**

**EP 3 065 012 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014119904 A
- EP 1052560 A1
- JP 4894961 B